# EUROPEAN PATENT SPECIFICATION

(11) **EP 1 314 600 B1**
(45) Date of publication and mention of the grant of the patent: **02.05.2007**
(21) Application number: 01204508.4
(22) Date of filing: 22.11.2001
(51) Int. Cl.: B60J 7/043

(54) **Vehicle and open roof construction**
Öffnungsfähige Fahrzeugdachkonstruktion
Construction de toit ouvrant de véhicule

(43) Date of publication of application: 28.05.2003
(73) Proprietor: Inalfa Roof Systems Group B.V., 5804 AH Venray (NL)
(72) Inventor: Grolle, Paul Robbert, 5708 AN Helmond (NL)
(74) Representative: Metman, Karel Johannes

(56) References cited:
- WO-A-00/29235
- DE-B- 1 280 710
- DE-C- 4 238 944
- DE-C- 4 238 945
- DE-C- 10 033 887
- US-A- 6 158 803

## Description

The present invention relates to a vehicle having an open roof construction in accordance with the preamble of claim 1.

Such an open roof construction is known, for example from DE-C-42 38 944, DE-C-42 38 945, WO-A-98/14342 or WO-A-00/29235.

The object of the present invention is to provide a new open roof construction of the kind referred to in the introduction.

In order to accomplish that objective, the open roof construction according to the invention is characterized by the features defined in the characterizing portion of claim 1.

Due to the features of the invention, there is created a relatively simple construction wherein the height-adjustable element is adopted to act both as the lifting device and as the guiding device. A separate forcing mechanism determines the transition between both movements, so that two separate movements are obtainable.

Preferably, the rotatable element substantially rotates when it acts as the lifting device and substantially slides when it acts as the guiding device, the forcing mechanism determining the transition between both movements.

In this embodiment, there is substantially rotating and substantially sliding movement of the rotatable element, so that the rear side of the closure element can first be lifted upwards before it is slid rearwardly.

The driving slide includes at least a part of the forcing mechanism. For example, the forcing mechanism includes a guide curve on the driving slide extending at least in vertical direction and engaging the rotatable element, whereas it is preferred that the forcing mechanism further includes a stationary forcing guide oriented at an angle to the guide curve of the driving slide and being in engagement with the rotatable element.

In this embodiment, the forcing mechanism includes crossing curves determining the motion of the rotatable element depending on that displacement of the driving slide. Such forcing mechanism is very simple in construction.

Preferably, the driving slide is in constant engagement with the rotatable element, and the front longitudinal guide track is extended rearwards of the roof opening, said front longitudinal guide track having an overlying longitudinal opening which may be covered by a sealing means which is deformable for allowing passage of the rotatable element.

This embodiment has the advantage that no transitions of parts from one member to another have to take place, since the driving slide remains in constant engagement with the rotatable element. This leads to a very reliable structure since points of transition are a cause for failure and require special measurements to ensure a proper transition, this will lead to a more expensive structure.

It is preferred that the front support is in engagement with a front guide curve provided on a front slide which is connected to the driving unit and guided in the front longitudinal guide track, and is also in engagement with a front stationary forcing guide curve, said front guide curve extending at least partly in vertical direction, and said front stationary forcing guide curve having a front portion at an angle to the front longitudinal guide track and a rear portion extending substantially parallel to the front longitudinal guide track.

As a result, there is created a simple means to adjust the height of the front side of the closure element.

The invention will hereafter be explained in more detail with reference to the drawings, showing in a very simple form the principles of an embodiment of the open roof construction according to the invention.

Fig. 1 is a plan view of a vehicle roof comprising the embodiment of the open roof construction according to the invention.

Fig. 2-7 are side view sketches illustrating the operation of the embodiment of the open roof construction according to the invention.

Fig. 8 is an enlarged sectional view according to the line VIII-VIII in Fig. 1.

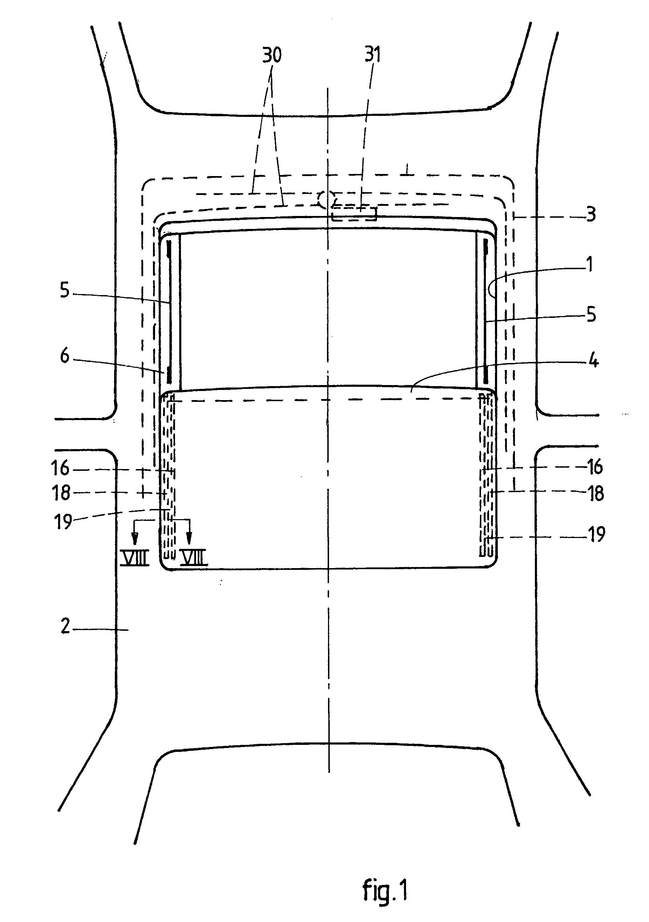

The drawings show an embodiment of an open roof construction for a vehicle, in particular a motor vehicle such as a passenger car. As is shown in Fig. 1, this vehicle is provided with an opening 1 in its fixed roof 2, whereby it is noted that said fixed roof 2 may either form part of the vehicle or of the open roof construction itself, which in that case makes up the entire roof of the vehicle. The fixed roof 2 may consist of an integral part of the vehicle or of one or more (transparent) panels, which may be removable or form a separate adjustable roof element.

The open roof construction comprises a stationary part, such as a frame 3, and a closure element, in this case in the form of a rigid and preferably transparent panel 4, for example made of glass or of plastic material, which is movably supported by frame 3. In this embodiment, panel 4 is movable between a closed position, in which roof opening 1 is closed and panel 4 is at least substantially coplanar with the fixed roof 2, and an open position, in which panel 4 occupies a rearward position, at least partially above fixed roof 2, in which a very large part of opening 2 is cleared.

An adjusting mechanism 5 is provided on each longitudinal side of panel 4 for effecting the movements of panel 4. The mechanism 5 is driven by a driving unit including a driving element, such as a driving cable 30 and a manual actuator, such as a crank, or a motor such as an electric motor 31, for driving the cable. The mechanism 5 supports panel 4 and is at least partially guided in a front longitudinal guide track 6, which forms part of or is mounted on frame 3. The front longitudinal guide track 6 not only extends along the side edge of roof opening 1, at a lower level than fixed roof 2, but is also extended rearwardly to the area of the roof 2 behind the roof opening 1. Furthermore, a rear longitudinal guide track 7 is provided, namely at the fixed roof, substantially rearward of the roof opening 1 and at a higher level than the first longitudinal guide track 6.

The panel includes a front support 8 and a rear support 9. They are both in engagement with a driving slide 16 which is guided in the front longitudinal guide track 6.

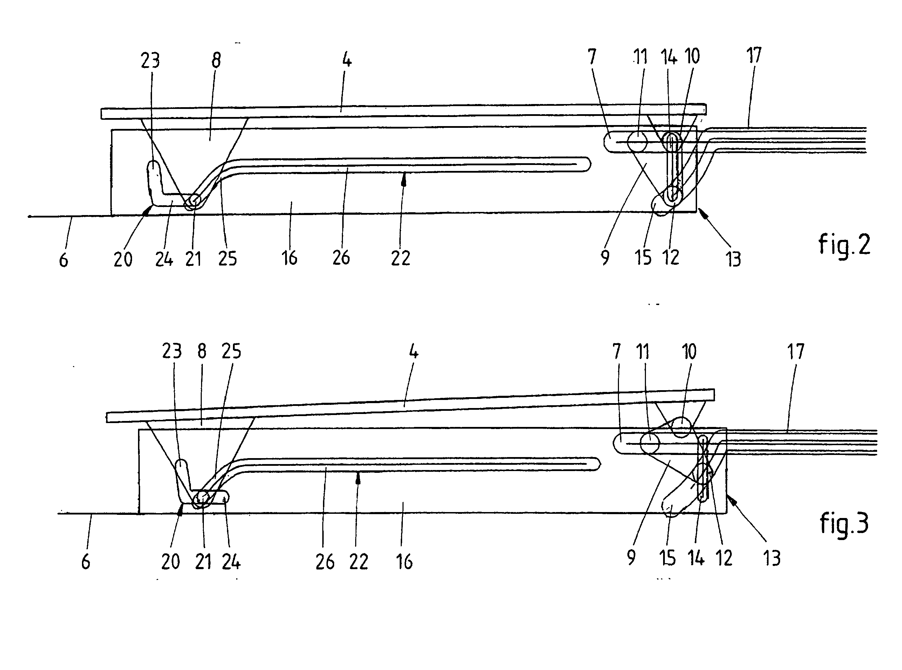

As is shown in fig. 2-7, the rear support 9 is constructed as a rotatable element which can act both as lifting device and a guiding device for moving the rear side of the panel in vertical direction and for guiding the panel 4 at its rear-side during a sliding movement thereof above the fixed roof of the vehicle. The rotatable element 9 has three engagement members, such as pins: a first engagement member 10 being connected, for example pivotally connected, to the panel 4, a second engagement member 11 engaging in the rear long longitudinal guide track 7 and a third engagement member 12 which is guided by a forcing mechanism 13. The engagement members are arranged in a triangular position with respect to each other.

The forcing mechanism 13 determines whether the rotatable element 9 acts as the lifting device or as the guiding device so as to impose a height-adjustment to the panel 4 or a sliding motion. The forcing mechanism includes a curve 14 in the driving slide 16, in this case a slot in which the third engagement member 12 engages. Curve 14 is substantially straight and extends in vertical direction (and/or perpendicular to the front longitudinal guide track), although other curve shapes are very well conceivable depending on the desired movement.

A second part of the forcing mechanism 13 is a stationary forcing guide 15 oriented at an angle to the guide curve 14 in the driving slide 16. The stationary forcing guide 15 is in engagement with the rotatable element 9, particularly through the third engagement member 12. For example, the third engagement member 12 is a pin extending in transverse direction from both sides of the driving slide 16, one half of which engages in the guide curve 14 and the other half in the stationary forcing guide 15. Also other arrangements are possible. The stationary forcing guide 15 connects at its rear upper end to a guide extension 17 which coïncides with or is parallel to the rear longitudinal guide track 7 of the first engagement member 10.

In the embodiment as shown, the rear longitudinal guide track 7 extends parallel to the front longitudinal guide track 6 extending underneath, so that when the third engagement member 12 has arrived in the guide extension 17, the third engagement member 12 will be locked at the upper end of the guide curve 14 and thus the rotatable element 9 will be blocked against rotation and will act as a guiding device for the sliding movement of the panel 4.

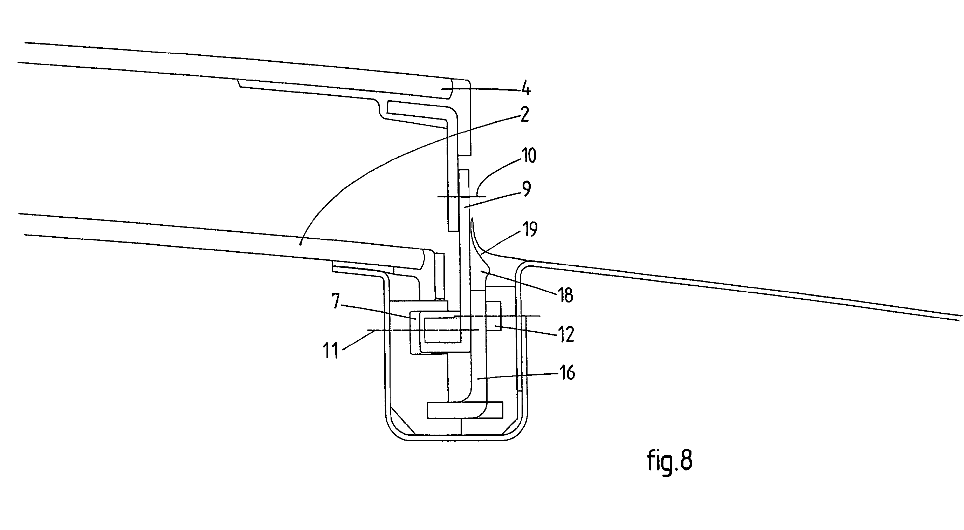

In order to enable the rotatable element 9 to move to a position behind the roof opening 1, there is created a longitudinal opening 18 extending parallel to the guide tracks 6 and 7 and allowing passage of the rotatable element 9 so that it can extend from the panel 4 to the driving slide 16. As a result the rotatable element 9 can be in constant engagement with the driving slide 16 although the driving slide has no supporting function when the third engagement member 12 is in the guide extension 17. A split seal 19 or the like in the longitudinal opening 18 seals or visually covers the opening but is deformable to allow passage of the rotatable element 9, as is illustrated in Fig. 8.

The front support 8 is in engagement with the driving slide 16 through a front guide curve 20, which is a slot in this embodiment. For that purpose, the front support is a front engagement member, here in a form of a transverse pin 21. The front engagement member 21 is also in engagement with a front stationary forcing guide 22. The front guide curve 20 includes a front portion 23 which is oriented steeply upwardly in forward direction, and a connected rear portion 24 which is substantially parallel to the front longitudinal guide track 6. The front stationary forcing guide 22 has a front portion 25 at an angle to the front longitudinal guide track 6 and a rear portion 26 extending substantially parallel to the front longitudinal guide track 6.

The operation of the open roof construction will be explained with reference to fig. 2-7.

In fig. 2, the panel 4 is in its closed position. In this position, the front engagement member 21 of the front support 8 is positioned at the rear end of the rear portion 24 of the front guide curve 20 and the driving slide 16. It is also positioned near the lower front end of the front stationary forcing guide 22, particularly in the front portion 25 thereof. The third engagement member 12 of the rotatable element 9 is positioned at the lower end of the rear guide curve 14 in the driving slide 16 and thus the rotatable element 9 is rotated maximally downwardly. It is positioned near the front end of the rear stationary forcing guide 15. The first engagement member 10 is positioned near the front end of the rear longitudinal guide track 7. Although not shown, the driving slide 16 will be positioned with its front end near the front end of the front longitudinal guide track 6.

In fig. 3 the driving slide 16 has been displaced rearwardly, for example circa 10 mm. The front guide curve 20 moves with respect to the front engagement member 21 of the front support 8 but due to the fact that this rear portion 24 of the front guide curve 20 extends parallel to the front longitudinal guide track 6 (and front portion 25 at an angle) the front engagement member 21 does not move in horizontal and vertical directions.

At the rear side of the panel 4, the third engagement member has been forced to move through the stationary forcing guide 15 due to the movement of the driving slide 16 and the engagement of the third engagement member 12 with the driving slide 16. The third engagement member 12 is allowed to move upwardly to the stationary forcing guide 15 due to the guide curve 14 which allows for an upward movement. The movement of the third engagement member 12 through the stationary forcing guide 15 causes the rotatable member 9 to rotate around the first engagement member 10 which is positioned in the rear longitudinal guide track 7. As a result, the rotatable element 9 and consequently the second engagement member 11 is rotated upwardly. The second engagement member 11 tilts the panel 4 upwardly.

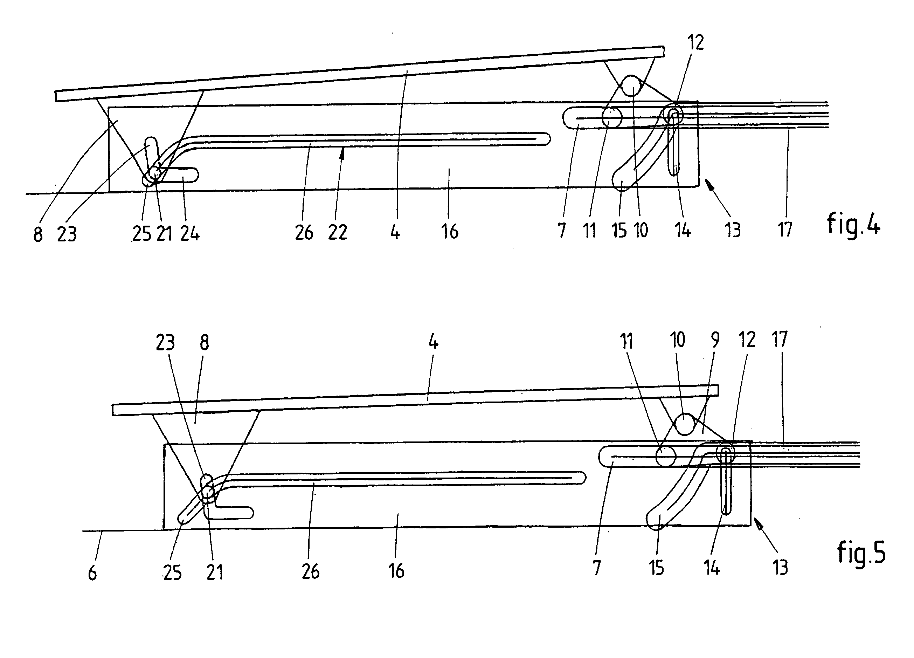

In fig. 4, the driving slide 16 has been slid rearwardly to such an extent that the third engagement number 12 has arrived at the transition between the stationary forcing guide 15 and the guide extension 17, and also at the upper end of the rear guide curve 14 and driving slide 16. The panel 4 is now in its upward tilting position, since the guide extension 17 extends parallel to the front longitudinal guide track 7 and to the rear longitudinal guide track 7. Thus, upon further rear movement of the driving slide 16, the rotatable element 9 will be locked against further rotation and will act as the guiding device for the panel 4. The front engagement member 21 of the front support 8 has arrived at the transition between the front and rear portions 23 and 24 of the front guide curve 20.

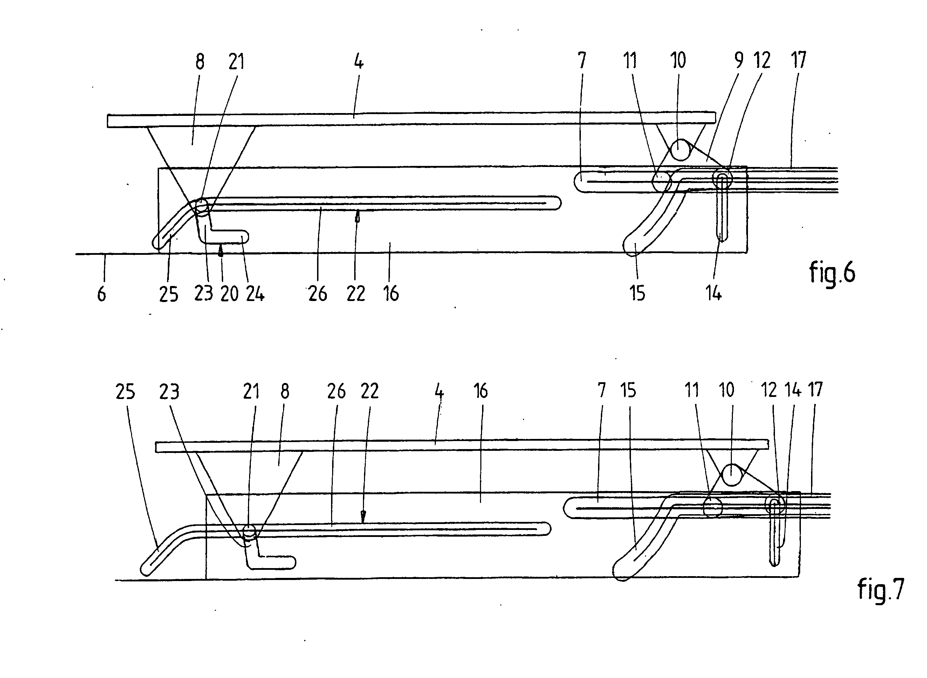

Fig. 5 shows a further rearwardly slid position of the driving slide 16 in which the third engagement member 12 is sliding through the guide extension 17, whereas the front engagement member 21 is sliding through the upwardly extending front portion of the front guide curve 20. This front portion 23 of the front guide curve 20 allows a movement of the front engagement member 21 through the front portion 25 of the front stationary forcing guide 22 so that the panel not only moves rearwardly, but the front side of the panel 4 also move slightly upwardly.

In fig. 6 the front engagement member 21 has arrived at the transition from the front portion 25 to the rear portion 26 of the front stationary forcing guide 22 and at the upper end of the front portion 23 of the front guide curve 20 in the driving slide 16. The front side of the panel 4 has now arrived in its upper position.

A further rearward displacement of the driving slide 16, as shown in fig. 7, will cause a rearward sliding movement of the panel 4, in which the driving slide 16 moves below the fixed roof 2, whereas the panel 4 moves over the fixed roof 2. The panel 4 is held in a very stable and reliable manner by the front support 8 and the rear rotatable element 9.

The return movement of the panel 4 to the front, closed position will be effected in an opposite manner.

From the foregoing it will be clear that the invention provides a very simple, yet robust and reliable support and actuating mechanism for the closure element.

The invention is not restricted to the exemplary embodiment as described above and shown in the drawing, which can be varied in several ways without departing from the scope of the claims. For example, it is possible that the height-adjustable element makes a sliding movement in vertical height, or a combined sliding and rotating movement.

## Claims

1. Vehicle having an open roof construction for opening an opening (1) in its fixed roof (2), comprising a stationary part (3) attached to the vehicle roof and at least one closure element (4) which is movably supported by said stationary part and which can be adjusted by means an adjusting mechanism (5) including a driving slide (16), wherein said closure element is movable between a closed position for closing the roof opening, and an open, rearward position for being at least partially above the roof area behind the roof opening, in which the roof opening is at least partially released, wherein said stationary part (3) is fitted with at least one front longitudinal guide track (6) extending at least along the roof opening (1), whereas a rear longitudinal guide track (7) is mounted at least substantially rearward of the roof opening, the closure element (4) being supported near its front side by a front support (8) which is movably guided by said front longitudinal guide track (6), and which is supported rearwards thereof by a lifting device comprising a guiding device for engagement in said rear longitudinal guide track (7) upon rearward movement of the closure element by means of the driving slide, **characterized in that** the lifting device and the guiding device are integrated and are together constructed as a height-adjustable, in particular rotatable, element (9) permanently connected to the closure element (4) out which is which has a forcing mechanism (13) determining whether the movable element (9) acts either as the lifting device or the guiding device.

2. A vehicle according to claim 1, wherein the rotatable element (9) substantially rotates when it acts as the lifting device and substantially slides when it acts as the guiding device, the forcing mechanism (13) determining the transition between both movements.

3. A vehicle according to any one of the preceding claims, wherein the driving slide (16) includes at least a part of the forcing mechanism (13).

4. A vehicle according to claim 3, wherein the forcing mechanism (13) includes a guide curve (14) on the driving slide (16) extending at least in vertical direction and engaging the rotatable element (9).

5. A vehicle according to claim 4, wherein the forcing mechanism (13) further includes a stationary forcing guide (15) oriented at an angle to the guide curve (14) of the driving slide (16) and being in engagement with the rotatable element (9).

6. A vehicle according to claim 5, wherein the stationary forcing guide (15) connects at its rear upper end to a guide extension (17) parallel to or coinciding with the rear longitudinal guide track (7).

7. A vehicle according to any of the preceding claims, wherein the rotatable element (9) has three engagement members, a first engagement member (10) being connected to the closure element (4), a second engagement member (11) engaging in the rear longitudinal guide track (7), and a third engagement member (12) being guided by the forcing mechanism (13).

8. A vehicle according to claim 7, wherein the stationary forcing guide (15) and the guide curve (14) of the driving slide (16) are in engagement with the third engagement member (12) of the rotatable element (9).

9. A vehicle according to claim 7 or 8, wherein the engagement members (10-12) are positioned in a triangular position with respect to each other.

10. A vehicle according to any of the preceding claims, wherein the driving slide (16) is in constant engagement with the rotatable element (9), and the front longitudinal guide track (6) is extended rearwards of the roof opening (1), said front longitudinal guide track (6) has an overlying longitudinal opening which may be (18) covered by a sealing means (19) which is deformable for allowing passage of the rotatable element (9).

11. A vehicle according to any of the preceding claims, wherein the front support (8) is in engagement with a front guide curve (20) provided on a front slide which is connected to the driving unit and guided in the front longitudinal guide track (6), and is also in engagement with a front stationary forcing guide curve (22), said front guide curve (20) extending at least partly in vertical direction, and said front stationary forcing guide curve (22) having a front portion (25) at an angle to the front longitudinal guide track (6) and a rear portion (26) extending substantially parallel to the front longitudinal guide track (6).

12. A vehicle according to claim 11, wherein the front slide having the front guide curve (20) is part of the driving slide (16).

13. A vehicle according to claim 11 or 12, wherein the front guide curve (20) includes a front portion (23) which is oriented steeply upwardly in forward direction, and a connected rear portion (24) which is substantially parallel to the front longitudinal guide track (6).

14. An open roof construction for use in the vehicle according to one of the preceding claims.

## Patentansprüche

1. Fahrzeug mit einer Offen-Dach-Konstruktion zum Öffnen einer Öffnung (1) in seinem Festdach (2), aufweisend: ein stationäres Teil (3), das an dem Fahrzeugdach angebracht ist, und wenigstens ein Schließelement (4), welches bewegbar von dem stationären Teil abgestützt ist und welches mittels eines einen Antriebsschlitten (16) aufweisenden Verstellmechanismus (5) verstellt werden kann, wobei das Schließelement zwischen einer Geschlossen-Position zum Schließen der Dachöffnung und einer hinteren Offen-Position, in welcher die Dachöffnung zumindest teilweise freigegeben ist, bewegbar ist zum wenigstens teilweise über dem Dachbereich hinter der Dachöffnung sein, wobei das stationäre Teil (3) mit wenigstens einer vorderen Längsführungsschiene (6) versehen ist, die sich zumindest entlang der Dachöffnung (1) erstreckt, wohingegen eine hintere Längsführungsschiene (7) zumindest im Wesentlichen hinter der Dachöffnung montiert ist, wobei das Schließelement (4) in der Nähe seiner Vorderseite von einer vorderen Halterung (8) abgestützt ist, welche bewegbar von der vorderen Längsführungsschiene (6) geführt ist, und wobei es rückwärtig davon von einer Hubeinrichtung abgestützt ist, die eine Führungseinrichtung aufweist zum Eingriff in der hinteren Längsführungsschiene (7) bei einer Rückwärtsbewegung des Schließelementes mittels des Antriebsschlittens, **dadurch gekennzeichnet, dass** die Hubeinrichtung und die Führungseinrichtung zusammengefasst sind und zusammen als ein höhenverstellbares, insbesondere verschwenkbares, Element (9) aufgebaut sind, welches permanent mit dem Schließelement (4) verbunden ist und welches einen Zwangsmechanismus (13) aufweist, der bestimmt, ob das bewegbare Element (9) entweder als die Hubeinrichtung oder als die Führungseinrichtung wirkt.

2. Fahrzeug gemäß Anspruch 1, wobei das schwenkbare Element (9) im Wesentlichen schwenkt, wenn es als die Hubeinrichtung wirkt, und im Wesentlichen gleitet, wenn es als die Führungseinrichtung wirkt, und wobei der Zwangsmechanismus (13) den Wechsel zwischen beiden Bewegungen bestimmt.

3. Fahrzeug gemäß einem der vorhergehenden Ansprüche, wobei der Antriebsschlitten (16) zumindest ein Teil des Zwangsmechanismus (13) aufweist.

4. Fahrzeug gemäß Anspruch 3, wobei der Zwangsmechanismus (13) eine Führungsbahn (14) an dem Antriebsschlitten (16) aufweist, die sich zumindest in Vertikalrichtung erstreckt und die mit dem schwenkbaren Element (9) in Eingriff ist.

5. Fahrzeug gemäß Anspruch 4, wobei der Zwangsmechanismus (13) ferner eine stationäre Zwangsführung (15) aufweist, die in einem Winkel zu der Führungsbahn (14) des Antriebsschlittens (16) ausgerichtet ist und die mit dem schwenkbaren Element (9) in Eingriff ist.

6. Fahrzeug gemäß Anspruch 5, wobei die stationäre Zwangsführung (15) an ihrem hinteren, oberen Ende mit einer Führungsverlängerung (17) verbunden ist, die parallel zu der hinteren Längsführungsschiene (7) ist oder mit dieser koinzidiert.

7. Fahrzeug gemäß einem der vorhergehenden Ansprüche, wobei das schwenkbare Element (9) drei Eingriffselemente aufweist, und wobei ein erstes Eingriffselement (10) mit dem Schließelement (4) verbunden ist, ein zweites Eingriffselement (11) in der hinteren Längsführungsschiene (7) in Eingriff ist und ein drittes Eingriffselement (12) von dem Zwangsmechanismus (13) geführt wird.

8. Fahrzeug gemäß Anspruch 7, wobei die stationäre Zwangsführung (15) und die Führungsbahn (14) des Antriebsschlittens (16) mit dem dritten Eingriffselement (12) des schwenkbaren Elementes (9) in Eingriff sind.

9. Fahrzeug gemäß Anspruch 7 oder 8, wobei die Eingriffselemente (10-12) in einer Dreieck-Stellung in Bezug aufeinander angeordnet sind.

10. Fahrzeug gemäß einem der vorhergehenden Ansprüche, wobei der Antriebsschlitten (16) in ständigem Eingriff mit dem schwenkbaren Element (9) ist und sich die vordere Längsführungsschiene (6) bis hinter die Dachöffnung (1) erstreckt, und wobei die vordere Längsführungsschiene (6) eine überlagernde Längsöffnung (18) aufweist, welche von einem Dichtungsmittel (19) abgedeckt sein kann, welches zum Ermöglichen des Passierens des schwenkbaren Elementes (9) verformbar ist.

11. Fahrzeug gemäß einem der vorhergehenden Ansprüche, wobei die vordere Halterung (8) mit einer vorderen Führungsbahn (20) in Eingriff ist, die an einem vorderen Schlitten vorgesehen ist, welcher mit der Antriebseinheit verbunden ist und welcher in der vorderen Längsführungsbahn (6) geführt ist, und ferner mit einer vorderen, stationären Zwangsführungsbahn (22) in Eingriff ist, wobei die vordere Führungsbahn (20) sich zumindest teilweise in Vertikalrichtung erstreckt, und wobei die vordere, stationären Zwangsführungsbahn (22) einen vorderen Abschnitt (25) in einem Winkel zu der vorderen Längsführungsschiene (6) und einen hinteren Abschnitt (26) aufweist, der sich im Wesentlichen parallel zu der vorderen Längsführungsschiene (6) erstreckt.

12. Fahrzeug gemäß Anspruch 11, wobei der die vordere Führungsbahn (20) aufweisende, vordere Schlitten Teil des Antriebsschlittens (16) ist.

13. Fahrzeug gemäß Anspruch 11 oder 12, wobei die vordere Führungsbahn (20) einen vorderen Abschnitt (23), welcher steil aufwärts in Vorwärtsrichtung ausgerichtet ist, und einen verbundenen, hinteren Abschnitt (24) aufweist, welcher im Wesentlichen parallel zu der vorderen Längsführungsschiene (6) ist.

14. Offen-Dach-Konstruktion zur Verwendung in dem Fahrzeug gemäß einem der vorhergehenden Ansprüche.

## Revendications

1. Véhicule ayant une construction de toit ouvrant pour ouvrir une ouverture (1) dans son toit fixe (2), comprenant une pièce fixe (3) fixée au toit du véhicule et au moins un élément de fermeture (4) qui est supporté de façon mobile par ladite pièce fixe et qui peut être ajusté au moyen d'un mécanisme d'ajustage (5) comprenant une coulisse d'entraînement (16), dans lequel ledit élément de fermeture est mobile entre une position fermée pour fermer l'ouverture du toit, et une position ouverte vers l'arrière pour être au moins partiellement au-dessus de la zone du toit derrière l'ouverture de toit, dans lequel l'ouverture de toit est au moins partiellement libérée, dans lequel ladite pièce fixe (3) est pourvue d'au moins une piste de guidage longitudinale avant (6) s'étendant au moins le long de l'ouverture de toit (1), alors qu'une piste de guidage longitudinale arrière (7) est montée au moins sensiblement vers l'arrière de l'ouverture de toit, l'élément de fermeture (4) étant supporté près de son côté avant par un support avant (8) qui est guidé de façon mobile par ladite piste de guidage longitudinale avant (6), et qui est supporté vers l'arrière par un dispositif de levage comprenant un dispositif de guidage pour venir en prise dans ladite piste de guidage longitudinale arrière (7) lors du mouvement vers l'arrière de l'élément de fermeture au moyen de la coulisse d'entraînement, **caractérisé en ce que** le dispositif de levage et le dispositif de guidage sont intégrés et sont construits ensemble comme un élément à hauteur réglable, en particulier rotatif (9) qui est connecté en permanence à l'élément de fermeture (4) et qui a un mécanisme de forçage (13) déterminant si l'élément mobile (9) agit comme dispositif de levage ou dispositif de guidage.

2. Véhicule selon la revendication 1, dans lequel l'élément rotatif (9) tourne sensiblement lorsqu'il agit comme dispositif de levage et coulisse sensiblement lorsqu'il agit comme dispositif de guidage, le mécanisme de forçage (13) déterminant la transition entre les deux mouvements.

3. Véhicule selon l'une quelconque des revendications précédentes, dans lequel la coulisse d'entraînement (16) comprend au moins une pièce du mécanisme de forçage (13).

4. Véhicule selon la revendication 3, dans lequel le mécanisme de forçage (13) comprend une courbe de guidage (14) sur la coulisse d'entraînement (16) s'étendant au moins dans la direction verticale et venant en prise avec l'élément rotatif (9).

5. Véhicule selon la revendication 4, dans lequel le mécanisme de forçage (13) comprend en outre un guide de forçage fixe (15) orienté suivant un angle par rapport à la courbe de guidage (14) de la coulisse d'entraînement (16) et en prise avec l'élément rotatif (9).

6. Véhicule selon la revendication 5, dans lequel le guide de forçage fixe (15) se connecte à son extrémité supérieure arrière à une extension de guidage (17) parallèle à ou coïncidant avec la piste de guidage longitudinale arrière (7).

7. Véhicule selon l'une quelconque des revendications précédentes, dans lequel l'élément rotatif (9) a trois éléments de mise en prise, un premier élément de mise en prise (10) relié à l'élément de fermeture (4), un deuxième élément de mise en prise (11) venant en prise dans la piste de guidage longitudinale arrière (7), et un troisième élément de mise en prise (12) guidé par le mécanisme de forçage (13).

8. Véhicule selon la revendication 7, dans lequel le guide de forçage fixe (15) et la courbe de guidage (14) de la coulisse d'entraînement (16) sont en prise avec le troisième élément de mise en prise (12) de l'élément rotatif (9).

9. Véhicule selon la revendication 7 ou 8, dans lequel les éléments de mise en prise (10-12) sont positionnés en position triangulaire les uns par rapport aux autres.

10. Véhicule selon l'une quelconque des revendications précédentes, dans lequel la coulisse d'entraînement (16) est en prise constante avec l'élément rotatif (9), et la piste de guidage longitudinale avant (6) s'étend vers l'arrière de l'ouverture de toit (1), ladite piste de guidage longitudinale avant (6) a une ouverture longitudinale chevauchante qui peut être (18) couverte par des moyens de scellement (19) qui sont déformables pour permettre le passage de l'élément rotatif (9).

11. Véhicule selon l'une quelconque des revendications précédentes, dans lequel le support avant (8) est en prise avec une courbe de guidage avant (20) prévue sur une coulisse avant qui est reliée à l'unité d'entraînement et guidée dans la piste de guidage longitudinale avant (6), et est également en prise avec une courbe de guidage de forçage fixe avant (22), ladite courbe de guidage avant (20) s'étendant au moins partiellement dans la direction verticale, et ladite courbe de guidage de forçage fixe avant (22) ayant une partie avant (25) formant un angle par rapport à la piste de guidage longitudinale avant (6) et une partie arrière (26) s'étendant sensiblement parallèlement à la piste de guidage longitudinale avant (6).

12. Véhicule selon la revendication 11, dans lequel la coulisse avant ayant la courbe de guidage avant (20) fait partie de la coulisse d'entraînement (16).

13. Véhicule selon la revendication 11 ou 12, dans lequel la courbe de guidage avant (20) comprend une partie avant (23) qui est orientée fortement vers le haut dans la direction avant, et une partie arrière connectée (24) qui est sensiblement parallèle à la piste de guidage longitudinale avant (6).

14. Construction de toit ouvrant à utiliser dans le véhicule selon l'une des revendications précédentes.
